Europäisches Patentamt

European Patent Office

Office européen des brevets

(19)

(11) **EP 0 699 636 B1**

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(51) Int. Cl.$^6$: **C03C 3/091**, C03C 3/093

(21) Anmeldenummer: **95110598.0**

(22) Anmeldetag: **07.07.1995**

(54) **Borsäurearmes Borosilikatglas und seine Verwendung**

Low boric acid borosilicate glass and its use

Verre borosilicate pauvre en acide borique et son application

(84) Benannte Vertragsstaaten:
**AT CH DE FR GB IT LI**

(30) Priorität: **30.08.1994 DE 4430710**

(43) Veröffentlichungstag der Anmeldung:
**06.03.1996 Patentblatt 1996/10**

(73) Patentinhaber: **JENAer GLASWERK GmbH**
**D-07745 Jena (DE)**

(72) Erfinder:
• **Watzke, Eckhart**
**D-07749 Jena (DE)**
• **Kämpfer, Andrea**
**D-07745 Jena (DE)**
• **Kloss, Thomas**
**D-07743 Jena (DE)**
• **Kemmler, Gerhard**
**D-07747 Jena (DE)**

(56) Entgegenhaltungen:
US-A- 3 499 776          US-A- 3 527 648
US-A- 4 259 118

• DATABASE WPI Section Ch, Week 7533 Derwent Publications Ltd., London, GB; Class L01, AN 75-55224W & SU-A-443 003 ( GLASS RES DES INST) , 15.Dezember 1974

**Beschreibung**

Die Borosilikatgläser umfassen viele Gruppen von Gläsern mit bekanntermaßen geschätzten Eigenschaften wie z.B. hohe thermische und chemische Beständigkeit und hohe mechanische Festigkeit.

Sie lassen sich problemlos maschinell nach konventionellen Technologien aus dem Schmelzfluß verarbeiten.

Entsprechend dem besonderen Verwendungszweck der Gläser sind einzelne der genannten oder zusätzliche Eigenschaften wie z.B. die elektrische Leitfähigkeit, die Verschmelzeigenschaften, die Transmission, die Absorption - einschließlich der Röntgenabsorption - oder die thermische Vorspannbarkeit bzw. die chemische Härtbarkeit durch spezielle Glaszusammensetzungen weiterentwickelt worden.

Aus dem Stand der Technik ist jedoch ersichtlich, daß weiterhin ein Bedarf an Gläsern mit verbesserten Eigenschaften besteht, an Gläsern, die möglichst viele der angestrebten physikalisch-chemischen Eigenschaften gleichzeitig besitzen.

Die US 3,499,776 hat ein $ZrO_2$-haltiges Borosilikatglas hoher chemischer Beständigkeit, insbesondere gegen Alkali-Angriffe zum Inhalt, mit einer Zusammensetzung (in Mol-%) die immer 72 - 85 % $SiO_2$ , 4 - 12 % $B_2O_3$ , 1 - 6 % $ZrO_2$ und 2,5 - 7 % $Na_2O$ und/oder $K_2O$ umfaßt.

Aus der US 3,527,648 ist eine Zusammensetzung (in Mol-%) für ein transparentes Glas, mit einem Wärmeausdehnungskoeffizienten $\alpha_{20/300}$ von 10 bis 40 x $10^{-7}$/°C zu entnehmen, die immer 78 - 85 % $SiO_2$ , 4 - 9 % $B_2O_3$ , 1 - 7 % BaO, 1 - 6 % $Al_2O_3$ , 1 - 5 % $Na_2O$ und 0 - 6 % $TiO_2$ aufweist.

In Tabelle 1 sind weitere bekannte Borosilikatgläser hoher thermischer und chemischer Beständigkeit mit geringer Wärmedehnung mit ihren Zusammensetzungen und ausgewählten Eigenschaften zusammengestellt.

Es wird deutlich, daß sowohl die Gläser im Bereich der Wärmedehnung $\alpha_{20/300}$ ca. 4 bis 5 x $10^{-6}$ $K^{-1}$ als auch das Vergleichsglas "Borosilicatglas 3.3" (Duran$^R$) mit der Laugenbeständigkeitsklasse 2 keine optimale Beständigkeit gegenüber Lauge besitzen.

Gemäß DIN 52 322 wird die Einteilung in Laugenbeständigkeitsklassen folgendermaßen vorgenommen:

| Klasse | Gewichtsverlust mg/dm$^2$ | Merkmal |
|---|---|---|
| 1 | bis 75 | geringer Angriff |
| 2 | über 75 bis 175 | mäßiger Angriff |
| 3 | über 175 | starker Angriff |

Gläser der LBK 1 dürfen demnach einen Abtrag von maximal 75 mg/dm$^2$ besitzen.

Es sind viele Borosilikatgläser im System $SiO_2$ - $B_2O_3$ - $Al_2O_3$ - $M_2O$ - MO ($M_2O$ = Alkalioxide, MO = Erdalkalioxide und ZnO) bekannt, die eine Laugenbeständigkeit mit einem Abtrag von ca. 100 mg/dm$^2$ besitzen, z.B. in Tab. 2, Beispiel 1.

Diese für höchste Anforderungen unzureichende Beständigkeit gegen Laugenangriff kann bekanntermaßen durch stabilisierende Zusätze - vor allem durch Zusatz von $ZrO_2$ - verbessert werden. Die positive Wirkung von $ZrO_2$-Zusätzen ist in der Fach- und Patentliteratur vielfach beschrieben - z.B. von Thiene, GLAS, 1939, Bd. 2, S. 634, 635; Scholze, Glas, Springer Verlag, 1988, S. 321 oder auch in Patentschriften wie z.B. dem GB-PS 791, 374, DE-PS 27 56 555, DE-PS 37 22 130 und der DD 301 821 A7.

In Tab. 2 sind Schmelzbeispiele aus der DD 301 821 A 7 aufgeführt, die belegen, daß mit Zusätzen von ca. 1-2 Gew.-% $ZrO_2$ der Laugenangriff reduziert werden kann, z.T. sogar soweit, daß u.U. die LBK 1 erreicht wird, siehe Tab. 2, Beispiel 4 und 5.

Das Glas gemäß Beispiel 5 der Tabelle 2 wurde dreimal geschmolzen und vermessen. Die erreichte Laugenbeständigkeit mit den Abträgen 70, 74 und 79 mg/dm$^2$ ist demnach insgesamt nicht in die LBK 1 einzuordnen. Eine Erhöhung der $ZrO_2$- Zusätze zur weiteren Verbesserung und damit Stabilisierung der Laugenbeständigkeit ist nicht sinnvoll, da Schmelz- und Kostenprobleme auftreten bzw. die Kristallisationsbeständigkeit des Glases verloren geht.

Am Beispiel der Schmelzen gemäß Tab. 2, Beispiel 5 wird deutlich, daß es für eine stabile Einstellung der LBK 1 vorteilhaft ist, den Abtrag unter ca. 70 mg/dm$^2$ zu senken, um eine "Beständigkeitsreserve" zu schaffen. Solch eine Reserve ist sogar auch dann sinnvoll, wenn eine Glaszusammensetzung bei Reproduktionsschmelzen Abtragswerte ergibt, die weniger streuen, z.B. im Bereich 70-73 mg/dm$^2$ liegen.

Da in der Praxis jedoch häufig kleine Änderungen der eigentlich festgelegten Zusammensetzungen vorgenommen werden müssen, um das Glas z.B. an das entsprechende Schmelzverfahren anzupassen, ist eine synthesebedingte Veränderung der Abtragswerte oftmals nicht zu umgehen. Die bekannten Borosilikatgläser im System $SiO_2$ > 70 Gew.-%; $B_2O_3$ < 15; $Al_2O_3$ < 10; $M_2O$ < 10; MO < 10 und $ZrO_2$ < 5 besitzen entweder den Nachteil -daß sie nicht das für eine hohe Laugenbeständigkeit erforderliche Verhältnis $SiO_2$:$B_2O_3$ > 8 (in Gew.-%) realisieren oder- daß sie zusätzlich notwendige Bedingungen hinsichtlich der Anteile von $SiO_2$, $Al_2O_3$ und $ZrO_2$ - siehe Tabelle 1, 2 und 3 - bzw. von MgO, CaO, BaO und ZnO nicht erfüllen.

Als typisches Beispiel einer im Sinne der Erfindung nicht optimalen Glaszusammensetzung sei das weltweit verwendete Glas vom JENA[er] Geräteglastyp der gerundeten Zusammensetzung (in Gew.-% auf Oxidbasis) $SiO_2$ 75; $B_2O_3$ 10; $Al_2O_3$ 5; $Na_2O + K_2O$ 5; CaO + BaO 5 aufgeführt, das zwar in modifizierter Form - siehe Tabelle 1, Beispiel 2 als JENA[er] G 20 - ein Verhältnis von $SiO_2$: $B_2O_3$=8,4 realisiert, aber kein $ZrO_2$ enthält und in der Summe $SiO_2+Al_2O_3$ (+$ZrO_2$) nur 80,5 Gew.-% erreicht.

Ein weiteres Beispiel nicht optimaler Laugenbeständigkeit ist durch das kommerzielle Glas SUPRAX[R]/8486 gegeben.

SUPRAX[R]/8488 stellt ein modifiziertes SUPRAX[R] dar, das auf Grund eines $ZrO_2$-Zusatzes eine verbesserte Laugenbeständigkeit innerhalb der LBK 2 besitzt, die LBK 1 jedoch ebenfalls nicht realisiert.

Da das Glas jedoch nicht die erfindungsgemäß gefundenen Bedingungen bezüglich des Basisglases erfüllt, kann mit dem Einführen von $ZrO_2$ eine entscheidende Verbesserung der Laugenbeständigkeit nicht erreicht werden.

Weitere Beispiele mit zu großen Anteilen von MO (MgO, CaO, BaO, SrO, ZnO) sind in Tabelle 3 zusammengestellt. Wenn Gläser relativ hohe Anteile von MgO, CaO, BaO, SrO und ZnO besitzen - Summe MO > 3 Gew.-% -, ist es nicht möglich, die erfindungsgemäß gefundenen Bedingungen hinsichtlich der Anteile und Verhältnisse der Komponenten zur Realisierung einer hohen Laugenbeständigkeit einzustellen. Die MO-reichen Gläser besitzen außerdem den Nachteil, daß sie auf Grund der Eigenabsorption dieser Oxide nur relativ geringe UV-Transmissionen ermöglichen.

Ein großer Nachteil der diskutierten Gläser besteht darin, daß sie keine Lithiumionen enthalten und damit nicht zur chemischen Härtung unterhalb der Transformationstemperatur geeignet sind bzw. daß oft nicht erkannt bzw. beachtet worden ist, daß thermisch vorspannbare Gläser bestimmte Anforderungen hinsichtlich des Verhältnisses der Wärmedehnungskoeffizienten oberhalb $T_g$ zu unterhalb $T_g$ erfüllen müssen.

Die thermische Vorspannbarkeit von Borosilikatgläsern hoher Temperaturwechselfestigkeit bzw. hoher Wärmespannungsfaktoren und Wärmedehnungskoeffizienten $\alpha_{20/300}$ = 3,39 - 5,32 x $10^{-6}$ $K^{-1}$ wurde in der Patentschrift DE-PS 27 56 555 diskutiert und gefunden, daß bei dieser Gruppe von Gläsern das Verhältnis $\alpha'/\alpha$ der Wärmedehnungskoeffizienten oberhalb $T_g$ ($\alpha'$) zu unterhalb $T_g$ ($\alpha$) zwischen 4,1 und 9,4 betragen soll, um eine verbesserte Vorspannbarkeit und damit mechanisch festere Gläser zu erreichen. Nachteiligerweise enthalten diese Gläser jedoch, wie in Tabelle 4 zu sehen, einen zu großen MO-Anteil, einen zu geringen $Al_2O_3$-Anteil usw., so daß die Synthesebedingungen zum Erreichen einer hohen Laugenbeständigkeit nicht gegeben sind, siehe Tabelle 4.

In der DE-PS 27 56 555 wird auf die Bedeutung des Wärmespannungsfaktor R hingewiesen, der dort wie folgt definiert wird:

$$R = \sigma_B (1-\mu)/\alpha E$$

R - Wärmespannungsfaktor
$\sigma_B$ - Biegezugfestigkeit (Grundfestigkeit + Druckvorspannung)
$\mu$ - Querkontraktionszahl
$\alpha$ - mittlerer linearer Wärmedehnungskoeffizient
E - Elastizitätsmodul

Nach Salmang-Scholze: "Die physikalischen und chemischen Grundlagen der Keramik", Springer-Verlag 1968, S. 334 ff, ist R der erste Wärmespannungsfaktor, der für große Wärmeübergangszahlen gilt und die maximale Temperaturdifferenz ($\Delta T_{max}$) angibt, die ein Körper gerade noch ohne Zerstörung verträgt.

Für thermisch hochbelastete, partiell erhitzte Gläser ist gemäß der o. g. Beziehung ein großer Wärmespannungsfaktor anzustreben, der über große Werte von $\sigma_B$ (z.B. durch Aufbringen einer großen Druckvorspannung) oder kleine Wärmedehnungskoeffizienten zu beeinflussen ist.

Auch die Bedeutung einer hohen Laugenbeständigkeit bei gleichzeitig hoher hydrolytischer und Säurebeständigkeit für Borosilicatglas 3.3 wird in der Literatur oft hervorgehoben - z.B. in SCHOTTinformationen 56/91, Heft 3, S. 18-20.

Eine hohe Laugenbeständigkeit kann u.U. auch wünschenswert sein, obwohl der direkte Anwendungszweck des Glases dieses nicht unbedingt erfordert.

Bei der Lagerung von herkömmlichen Floatglasscheiben mit LBK 2 bildet sich z.B. Schwitzwasser, das zum alkalischen Angriff und damit zur Auflösung des Netzwerkes führt, sodaß eine erhöhte Laugenbeständigkeit wünschenswert wäre (Feldmann, M.; u.a. Vortrag "Untersuchung korrodierter Floatglasoberflächen" 66. DGG-Tagung, Fulda, Mai 1992). Aus dieser Beobachtung kann man ableiten, daß gefloatetes Borosilikatglas eine sehr hohe Laugenbeständigkeit besitzen sollte.

Die Aufgabe der Erfindung besteht in der Bereitstellung neuer Zusammensetzungen von borsäurearmen Borosilikatgläsern hoher chemischer Beständigkeit, insbesondere mit einer Laugenbeständigkeit nach DIN 52 322 der Klasse 1, einer niedrigen Wärmedehnung $\alpha_{20/300}$ zwischen 4,0 und 5,3x$10^{-6}$$K^{-1}$, einem Verhältnis $\alpha'/\alpha$ der Wärmedehnungs-

koeffizienten oberhalb $T_g$ ($\alpha$') zu unterhalb $T_g$ ($\alpha$) von 4 bis 8, einer Glastransformationstemperatur zwischen 500 und 600 °C, hoher Strahlungsdurchlässigkeit und einer UV-Transmission $\tau_{250\ nm/1mm}$ von 0-70% bzw. $\tau_{300nm/\ 1\ mm}$ von 0-91%.

Des weiteren ist es Aufgabe der Erfindung ein Borosilikatglas vorzustellen, das zur Erhöhung der mechanischen und thermischen Festigkeit chemisch oberhalb und unterhalb des Transformationsbereiches zu härten, bzw. thermisch vorspannbar ist und mit hoher Transmission im UV, VIS und nahen IR in konventionellen und modernen Schmelz- und Verarbeitungsverfahren - wie z.B. dem Floatverfahren - hergestellt werden kann.

Erfindungsgemäß wird die Aufgabe durch das in Patentanspruch 1 beschriebene Glas gelöst.

Überraschenderweise wurde gefunden, daß man im an sich bekannten Borosilikatsystem $SiO_2$ - $B_2O_3$ - $Al_2O_3$ - $M_2O$ - MO Glaszusammensetzungen schmelzen kann, die die obengenannte komplexe Aufgabenstellung erfüllen, wenn man bestimmte spezielle Bedingungen hinsichtlich der Anteile und Verhältnisse der Komponenten kennt und einhält. Im Bereich der Zusammensetzungen (in Gew.-% auf Oxidbasis) SiO > 75; $B_2O_3$ 1 bis < 9; $Al_2O_3$ 3-6; $Li_2O$ 0-4; $Na_2O$ 0-8; $K_2O$ 0-6; MgO 0-3; CaO 0-3; BaO 0-2; SrO 0-2; ZnO 0-3; $ZrO_2$ 0-3; $SnO_2$ 0-3; SnO 0-3; $TiO_2$ 0-2; $CeO_2$ 0-2; $Fe_2O_3$ 0-1; sind Gläser mit hoher Laugenbeständigkeit herzustellen, wenn sie möglichst viel Glasbildner - Summe $SiO_2$ + $B_2O_3$ >83 Gew.-% -, im Verhältnis zu $B_2O_3$ aber viel $SiO_2$ - $SiO_2$ : $B_2O_3$ >8 - und gleichzeitig einen hohen Anteil von $SiO_2$ , $Al_2O_3$ und $ZrO_2$ - Summe>83 Gew.-% - bei einem Alkalioxidgehalt von $Li_2O$ + $Na_2O$ + $K_2O$ 5-10 Gew.-% und in der Summe nicht mehr als 3 Gew.-% MgO+CaO+BaO+SrO+ZnO enthalten.

Das $ZrO_2$ muß nicht zwangsläufig ins Glas eingeführt werden. Wenn auf die Verwendung von $ZrO_2$ verzichtet wird, beträgt der Abtrag nach DIN 52 322 ca. 65-70 mg/dm$^2$ , d.h. LBK 1 wird erreicht. Wird dagegen mit Gehalten von ca. 1-2 Gew.-% $ZrO_2$ gearbeitet, verringert sich der Abtrag auf Werte von bis zu ca. 40 mg/dm$^2$, so daß sehr gute Laugenbeständigkeiten bzw. sehr große Laugenbeständigkeitsreserven realisiert werden.

Bei Erhöhung des $ZrO_2$ -Anteils über 2 Gew.-% hinaus treten z.T. Schmelzrelikte auf, die bei über 3 Gew.-% $ZrO_2$ -Zusatz nicht mehr aufzulösen sind und die für dieses System höchsten UV-Durchlässigkeiten von $\tau_{250\ nm/1mm}$ bis zu ca. 70% bzw. $\tau_{300nm/1mm}$ bis zu ca. 91% können nicht erreicht werden, da $ZrO_2$ eine nicht vernachlässigbare UV-Absorption besitzt.

Es wurde weiter gefunden, daß die erhöhte Laugenbeständigkeit mit den Strukturparametern der Boratgruppen korreliert. Ramanspektroskopische Untersuchungen zeigen, daß in einem herkömmlichen Glas vom Geräteglastyp G20 (Tab. 2, Beispiel 5) bei 814 cm$^{-1}$ dreifach koordinierte Borionen und bei 780 cm vierfach koordinierte Borionen vorliegen und die $BO_3$ -Gruppen bei einem Verhältnis $SiO_2$: $B_2O_3$ = 6,8 etwas überwiegen.

Bei Erhöhung des $SiO_2$ : $B_2O_3$ Verhältnisses auf z.B. 15,1 bzw. 15,2 wird die Boratstruktur dahingehend geändert, daß der Anteil der $BO_4$ -Gruppen stark zunimmt und den $BO_3$ -Gruppenanteil um gut das Doppelte übertrifft. Dabei ist es unwesentlich, ob die Alkalioxide vorrangig als z.B. $Na_2O$ oder $K_2O$ eingeführt werden. Die Struktur und damit die Laugenbeständigkeit wird bei konstanten Anteilen von $Al_2O_3$ , $ZrO_2$ , MO und $MO_2$ offensichtlich vom Verhältnis $SiO_2$ zu $B_2O_3$ bestimmt.

Die Alkalioxide $Li_2O$, $Na_2O$ und $K_2O$ sollen in der Summe 5-10 Gew.% betragen um die Wärmedehnung $\alpha_{20/300}$ im Bereich 4,0 bis 5,3 x $10^{-6}$ $K^{-1}$ einzustellen. Außer über die Menge an Alkalioxiden kann die Wärmedehnung über die Art der Alkalioxide beeinflußt werden. Mit $K_2O$ erreicht man die größten $\alpha$-Werte.

Die Alkalioxide beeinflussen außerdem die Schmelzbarkeit und Viskosität des Glases. Um diese Eigenschaften zu verbessern , ist ein Gehalt von mindestens 0,05 Gew.% $Li_2O$ erforderlich. Mehr als 4 Gew.% $Li_2O$ verringern die Kristallisationsbesändigkeit des Glases in unvertretbarem Maße. Es wurde festgestellt, daß - wie vielfach in der Literatur beschrieben (z.B.: Glas Industry 69, (1988) March 10, S.18-25 oder Glastech. Ber. G3, (1990) S.410-419) - die durch den $Li_2O/Li_2CO_3$ - Zusatz verursachten erhöhten Gemengekosten durch die Verwendung von kostengünstigen Lithiummineralien wie z.B. speziellen Spodumenen erheblich gesenkt werden können und daß bereits das Einführen von geringen Mengen von Lithiumverbindungen (ab ca.0,05 Gew.%) in das Glas die Schmelz- und/oder Viskositätseigenschaften sehr günstig beeinflußt.

Da die kleinen Lithiumionen eine gute Voraussetzung für eine chemische Härtung des Glases durch Ionenaustausch unterhalb der Transformationstemperatur bilden und Mengen von ab ca. 0,5 Gew.% $Li_2O$ im Austausch gegen $K_2O$ eine merkliche Erhöhung des elektrischen Volumenwiderstandes und damit der elektrischen Isolationsfähigkeit des Glases unterhalb $T_g$ bewirken (AMERICAN CERAMIC SOCIETY BULLETIN, 72, (1993), 4, S.85-88), wurde $Li_2O$ zusätzlich als vorteilhafte Komponente in das Glas eingeführt.

Es wurde beim Schmelzen ermittelt, daß das Glas bei $Li_2O$-Anteilen von ca. 1 Gew.% relativ große Mengen an $Na_2O$ und $K_2O$ enthalten kann. Zur Realisierung der vorgegebenen Wärmedehnung, der hohen chemischen Beständigkeit und einer ausreichenden Kristallisationsstabilität dürfen die Gehalte von $Li_2O$ 4 Gew.%, von $Na_2O$ 8 Gew.% und von $K_2O$ 6 Gew.% nicht überschreiten, bzw. muß ihre Summe $M_2O$ 5-10 Gew.% betragen.

Eine ausreichende elektrische Leitfähigkeit der Schmelze zur Anwendung von vollelektrischen Schmelzverfahren ist gegeben, wenn die Bedingung $Li_2O$+ $Na_2O$+$K_2O$ 5-10 Gew.% erfüllt ist, aber vorzugsweise auf einen $K_2O$-Zusatz verzichtet wird. Die elektrische Isolationsfähigkeit der erfindungsgemäßen Gläser - charakterisiert durch den $T_K$-100 Wert (Temperatur bei der die spezifische elektrische Leitfähigkeit K = 100 x $10^{-10}\Omega^{-1}$ cm$^{-1}$ beträgt) - liegt wie bei den bekannten Borosilikagläsern vom Geräteglastyp über 200°C, sodaß auch Glasanwendungen z.B. in der Lampenindustrie möglich sind - besonders wenn gleichzeitig ein hoher $T_g$-Wert von nahe 600°C realisiert wird.

Zur Herstellung von Gläsern ohne Restradioaktivität muß ebenfalls auf die Verwendung von $K_2O$, aber auch auf den Einsatz von $ZrO_2$ verzichtet werden.

Gammastrahlenresistentes Glas kann man in dem erfindunggemäßen Glassystem herstellen, in dem in bekannter Weise kleine Mengen von bis zu 2 Gew.% $CeO_2$ in das Glas eingeführt werden.

Ein eventuell zu erwartender erhöhter Angriff von $Li_2O$ auf das üblicherweise zum Schmelzen von Borosilikatgläsern verwendete $ZrO_2$-haltige Feuerfestmaterial - z.B. schmelzflüssig gegossene Steine mit ca. 30, ca. 40 oder ca. 90 Gew.% $ZrO_2$-Anteil - wurde, wenn $Li_2O$ zusammen mit $ZrO_2$ in das Glas eingeführt wird, bei Verwendung von Steinen mit ca. 30 Gew.% $ZrO_2$ nicht beobachtet.

Die treibende Korrosionskraft "$C_s$ - $C_o$" wird durch $ZrO_2$-Zusätze zum Glas verringert, wobei

$C_s$ = Sättigungskonzentration von $ZrO_2$ im Glas

$C_o$ = Konzentration der Schmelze an $ZrO_2$ gemäß Glassynthese;

d.h., daß die Korrosion bei durch den Glastyp gegebener $C_s$ durch die Erhöhung von $C_o$ verringert und damit die durch $Li_2O$ eventuell verursachte Korrosion kompensiert wird.

Es wurde weiterhin festgestellt, daß zur Erhöhung der Transformationstemperatur nur beschränkte Mengen MO (MgO, CaO, SrO, BaO, ZnO) in das Glas eingeführt werden können, da sonst die in Borosilikatgläsern stets zu beobachtende Phasentrennung in unzulässigem Maße verstärkt wird, was wiederum negative Auswirkungen auf die chemische Beständigkeit, vorrangig die hydrolytische Beständigkeit, haben kann.

Für spezielle Glasanwendungen wie z.B. für thermisch stark belastete Hochleistungslampen, die hohe Transformationstemperaturen von bis zu ca. 600°C erfordern, kann der MO-Gehalt jedoch bis zu 3 Gew.% betragen.

Sonst kann im allgemeinen auf die Verwendung von MO verzichtet werden - außer, wenn z.B. kleine Mengen von BaO oder CaO als Schmelzbeschleuniger als z.B. Fluoride eingebracht, positive Effekte verursachen.

Wenn das erfindungsgemäße Glas eine geringe Röntgenabsorption besitzen soll, muß auf die Verwendung relativ schwerer Glaskomponenten wie $ZrO_2$, SrO, BaO, ZnO oder bei den Alkalioxiden auf die Verwendung von $K_2O$ ebenfalls verzichtet werden.

Die Verwendung von SrO als Glaskomponente ist durch die hohen Kosten jedoch auf Ausnahmen beschränkt.

Wenn das neue Glas als Ampullenglas für die pharmazeutische Industrie hergestellt werden soll, darf es ebenfalls kein oder nur sehr wenig BaO enthalten, um mögliche $BaSO_4$ Ausfällungen in den Injektionslösungen zu unterbinden.

Dem Glas können bis zu 3 Gew.% Zinnoxid zur weiteren Erhöhung der chemischen Beständigkeit zugesetzt werden, ohne daß nachteilige Schmelzrelikte auftreten.

Bei Verwendung von zweiwertigen Zinnverbindungen kann die Schmelze zusätzlich reduzierend eingestellt werden, um z.B. eine Reduktion von $Fe^{3+}$ zu $Fe^{2+}$ zur Erhöhung der UV-Transmission oder verbesserte Solarisationsstabilität zu erreichen.

Für Anwendungsfälle, die speziell UV-undurchlässiges Glas erfordern, können dem Glas bekannte starke UV-Absorber wie z.B. $TiO_2$ und/oder $Fe_2O_3$ zugesetzt werden. Die Menge richtet sich nach der Lage der angestrebten UV-Kante, so daß ca. bis zu 2 Gew.-% $TiO_2$ und/oder bis zu 1 Gew.-% $Fe_2O_3$ ausreichend sind.

Als Fluß- bzw. Läutermittel können dem Gemenge bekannte Verbindungen wie z. B. Fluoride und/oder Chloride bis zu Anteilen von 4 Gew.-% zugesetzt werden. Die Verwendung von Fluoriden ist zusätzlich dann vorteilhaft, wenn die Viskosität des Glases verringert werden soll.

Es ist ersichtlich, daß innerhalb der erfindungsgemäßen Glaszusammensetzungsbereiche, je nach Verwendungszweck des Glases, viele Synthesesvariationen zur Optimierung spezieller Eigenschaften möglich sind.

Im folgenden wird die Erfindung näher erläutert.

Es wurden Laborschmelzen durchgeführt, die durch ihre Glassynthesen, Komponentenanteile und -verhältnisse und durch ihre physikalischen und chemischen Eigenschaften charakterisiert sind.

In allen Fällen beträgt der Anteil der Glasbildner - Summe $SiO_2$ + $B_2O_3$ -mehr als 83 Gew.-%, ist der Anteil von $SiO_2$ zu $B_2O_3$ größer als 8 und beträgt die Summe von $SiO_2$ + $Al_2O_3$ + $ZrO_2$ mehr als 83 Gew.-%, so daß die angestrebte sehr gute Laugenbeständigkeit - LBK 1 - trotz sonst sehr unterschiedlicher Gehalte an $Li_2O$, $Na_2O$ und $K_2O$ erreicht wird.

Der Laugenangriff kann - wie der Abtrag von 68 bis 41 mg/dm$^2$ belegt - über die Glaszusammensetzung in einem großen Bereich variiert werden.

Die Gläser mit einem Abtrag von ca. 40 mg/dm$^2$ sind mit der Laugenbeständigkeit von Quarzglas vergleichbar, da bei Quarzglas - gemessen unter den gleichen Bedingungen nach DIN 52 322 - ein Abtrag von 35 mg/dm$^2$ bestimmt worden ist.

Oxidische Mehrkomponentengläser mit geringen $ZrO_2$-Gehalten von 1-2 Gew.-%, die sich problemlos und in guter Qualität erschmelzen lassen und quarzglasähnliche Laugenbeständigkeit besitzen, sind bisher nicht bekannt.

Alle erfindungsgemäßen Gläser realisieren außerdem die hydrolytische Klasse HBK 1 (nach DIN 12 111) und die Säurebeständigkeitsklasse SBK 1 (nach DIN 12 116).

Weiterhin, kann über die Menge und Art der Alkalioxide die Wärmedehnung im Bereich von 4,1 bis 5,3 x $10^{-6}$ $K^{-1}$ eingestellt werden und damit konnten Temperaturwechselfestigkeiten bzw. Temperaturunterschiedsfestigkeiten von bis zu ca. 145 K erreicht werden.

Dabei erhöht sich bei großen Gehalten von $Li_2O$ die bei Borosilikatgläsern nicht ganz zu vermeidende Entmischungstendenz, so daß Gläser die nach dem Schmelzprozeß extrem starken Temperaturbeanspruchungen ausgesetzt sind, nur relativ geringe Anteile von kleiner ca. 1 Gew.-% $Li_2O$ enthalten sollten.

Außerdem besitzen die Gläser mit dem Verhältnis $\alpha': \alpha$ = 5,2 bis 7,2 gute Vorraussetzungen zum thermischen Vorverspannen, wobei $T_g$-Werte von ca 500 °C bis zu ca. 600 °C eingestellt werden können, so daß Anwendungen als Lampenglas unter erhöhter thermischer Belastung oder das Ausheizen von z. B. Röntgenröhrengläsern bei erhöhten Temperaturen möglich werden.

Die für die Temperaturwechselbeständigkeit (TWB für nicht vorverspanntes Glas, E und $\mu$-Werte wurde angenommen) errechneten Werte zwischen 107 und 145 K zeigen, daß die für einfache Anwendung (z.B. gering belastete Hauswirtschaftsgläser) erforderlichen R-Werte von ca. 110 K und die für anspruchsvollere Anwendungen (z.B. Laborgläser, Verschmelzgläser) notwendigen TWB-Werte von ca. 140 K realisiert werden.

Im Folgenden soll ein erfindungsgemäßes Glas dem kommerziellen Universalglas Duran[®], das den international festgelegten Typ des Borosilicatglases 3.3 (DIN - ISO 3585) repräsentiert, gegenübergestellt werden.

Das erfindungsgemäße Glas realisiert bei gleicher hydrolytischer und Säurebeständigkeit wie Duran[®] mit 55 mg/dm² Laugenabtrag eine mehr als doppelt so große Laugenbeständigkeit wie Duran[®] (Abtrag ca. 130 mg/dm²).

Da das neue Glas eine so wesentlich erhöhte Laugenbeständigkeit besitzt, ist es besser als Duran[®] für neue Anwendungen, für Veredelungsprozesse der Weiterverarbeitung, z.B. Beschichtungen, oder die alkalischen Angriff verursachende Lagerung gefloateter Glasscheiben geeignet.

Eine Gegenüberstellung der Viskositäten im unteren Temperaturbereich, die man z. B. durch die Transformationstemperatur $T_g$ und die Zähigkeitstemperatur Z 1 (entspricht log $\eta$ = 8,4) charakterisieren kann und der Viskositäten in oberen Temperaturbereich - charakterisiert durch die Verarbeitungstemperatur VA (entspricht T bei log $\eta$ = 4) - ergibt folgendes Bild

|  | Duran[®] | Glas nach der Erfindung |
|---|---|---|
| $T_g$ (°C) | 530 | 568 |
| $Z_1$ (°C) | 785 | 791 |
| $V_A$ (°C) | 1270 | 1260 |

und erlaubt die Aussage, daß das erfindungsgemäße Glas im unteren Temperaturbereich thermisch stabiler ist und gleichzeitig im oberen Temperaturbereich geringere Viskositäten besitzt, so daß es einfacher zu verarbeiten und zu erschmelzen ist.

Es ist einleuchtend, daß eine Erhöhung der zulässigen Gebrauchstemperatur und eine sprunghafte Erhöhung der Resistenz gegen den Angriff alkalischer Medien neue Anwendungsmöglichkeiten des erfindungsgemäßen Glases - z.B. als Abgasleitungen, die heißen agressiven Kondensaten ausgesetzt sind, zulassen. Die bekannte Beständigkeit von Duran[®] gegenüber chemischem Angriff, auch bei längeren Einwirkungszeiten und erhöhten Temperaturen wird weiter verbessert, so daß das erfindungsgemäße Glas in seiner chemischen Widerstandsfähigkeit die meisten Metalle und andere Werkstoffe übertrifft. Da das neue Glas gegenüber Duran[®] ein verbessertes Schmelzverhalten besitzt und die Viskositäten im Hochtemperaturbereich erniedrigt bzw. im Tieftemperaturbereich erhöht werden konnten, kann eine verbesserte Herstellbarkeit nach dem Floatverfahren erwartet werden.

Duran[®] ist jedoch dem "Borsäurearmen Borosilikatglas" nach der Erfindung auf Grund seiner minimalen Wärmedehnung von $\alpha_{20/300}$ = 3,3 x $10^{-6}$/$K^{-1}$ hinsichtlich der TWB mit ca. 190 K weiterhin überlegen.

Wenn die Glaszusammensetzungen der erfindungsgemäßen Gläser jedoch so gewählt werden, daß relativ kleine Wärmedehnungen von $\alpha_{20/300}$ ca. 4,0 bis 4,2 x $10^{-6}$/$K^{-1}$ realisiert werden, können jedoch auch TWB-Werte von ca. 135K - 150K erreicht werden, die für die meisten Anwendungsfälle ausreichend hoch sind.

Die im Vergleich zu Duran[®] erhöhten Wärmedehnungswerte zusammen mit dem wesentlich verändertem Verhältnis $\alpha': \alpha$ (Steigerung von 3,8 auf z.B. 6,8) verleiht den neuen Gläsern jedoch die besondere Eigenschaft einer wesentlich verbesserten spezifischen Vorspannbarkeit bzw. Härtbarkeit.

Die auf diese Weise zu erzielende erhöhte Oberflächendruckspannung bildet wiederum die Vorraussetzung der Verwendung des Glases als Brandschutzglas mit hoher mechanischer Festigkeit. Das erfindungsgemäße Glas ist somit besser als Duran[®] zur Herstellung als Floatglas mit anschließender Härtung und Verwendung als Brandschutzsicherheitsglas geeignet.

Eine Abschätzung der Wärmespannungsfaktoren für vorverspanntes Glas ergibt, daß die neuen Gläser gegenüber Duran[®] ähnlich gute Eigenschaften besitzen. Bei gleichen Werten der Grundfestigkeiten der Gläser, der Querkontrak-

6

tionszahlen und der Elastizitätsmodule wird der Wärmespannungsfaktor nur von der durch die Vorspannung (Härtung) eingebrachten Druckvorspannung und der Wärmedehnung beeinflußt. Da R bei der Erhöhung der Druckvorspannung bzw. der Biegezugfestigkeit mit größer werdender Wärmedehnung steigt und erhöhte Wärmedehnung gleichzeitig den R-Wert verringert, liegen die Wärmespannungsfaktoren der erfindungsgemäßen Gläser in der gleichen Größenordnung wie Duran$^{®}$, so daß gleich gutes Verhalten bei partieller Glaserhitzung zu erwarten ist.

Als weitere besondere Eigenschaften der neuen Gläser nach der Erfindung soll die gute Strahlungsdurchlässigkeit im gesamten Bereich der Sonnenstrahlung aufgeführt werden. Die "borsäurearmen Borosilikatgläser" realisieren, wenn sie ohne oder mit nur geringen Anteilen von MO bzw. $ZrO_2$ erschmolzen werden, im Wellenlängenbereich von ca. 250 bis ca. 2700 nm eine hohe Strahlungstransmission, so daß sie vorteilhafterweise z.B. in Solarkollektoren und Solarreaktoren eingesetzt werden können.

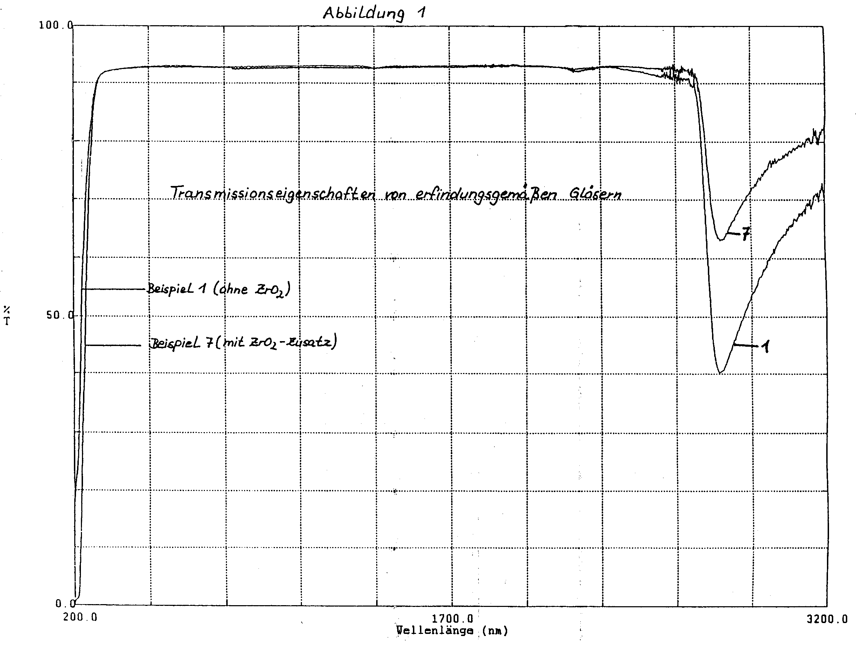

Wenn das Glas mit eisenarmen Rohstoffen erschmolzen wird, können die in Abb. 1 wiedergegebenen Lichtdurchlässigkeiten erreicht werden. Die Kurve 1 wurde an einem Beispiel mit der Summe MO = 0,5 Gew.-%, ohne $ZrO_2$ - Zusatz, die Kurve 2 an einem Beispiel mit der Summe MO = 0,5 Gew.-%, $ZrO_2$ -Gehalt = 1,6 Gew.-%, für 1 mm Schichtdicke aufgenommen.

Die neuen Gläser eignen sich weiterhin sehr gut für fotochemische Anwendungen, die im Bereich von 280 bis 400 nm - z.B. Chlorierungen und Sulfochlorierungen - stattfinden, da im Gegensatz zu Duran$^{®}$ bis zu ca. 300 nm noch die maximal mögliche UV-Transparenz von ca. 91% erreicht wird.

Da die erfindungsgemäßen Gläser eine ausgezeichnete Resistenz gegenüber dem Angriff alkalischer Medien besitzten, kann man sie auch in Pulverform als Zusatz für Fritten oder keramische Glasuren zur Verbesserung ihrer sonst unzureichenden Alkalienbeständigkeit verwenden. Da das erfindungsgemäße Glas ohne Absorptionsverluste im UV, VIS und nahen IR herzustellen ist, können auch farblose bzw. weiße Systeme damit versetzt werden. Sinngemäß Gleiches gilt für farbige Systeme, wenn das erfindungsgemäße Glas vorher entsprechend eingefärbt worden ist.

Die neuen Gläser besitzen gute Kristallisationsbeständigkeiten. Sie genügen den für alkalihaltige Borosilikatgläser bekannten, empirisch ermittelten Bedingungen der Kristallisationsbeständigkeit.

Für ein erfindungsgemäßes $K_2O$ -freies Glas wurden folgende Kristallisationseigenschaften nach dreistündiger Temperung im horizontalen Gradientenofen bestimmt: Kristallisation im Bereich ca. 700-1130 °C, max. Kristallwachstumsgeschwindigkeiten ca. 50 µm/Std. bei ca. 960 °C (T bei KG $_{max}$). D.h. daß die Verarbeitungstemperatur ($V_A$ = 1260 °C) ca. 130 °C über der Liquidustemperatur ($T_L$) liegt. Unter gleichen Meßbedingungen wurden für ein erfindungsgemäßes $K_2O$ -haltiges Glas folgende Werte ermittelt: Kristallisationsbereich ca. 700-1115 °C, KG $_{max}$ ca. 50 µm/Std., T (KG $_{max}$ ) ca. 1000 °C. Auch für dieses Glas wird die in der Praxis angewendete "Stabilitätsbedingung": $V_A$-$T_L$ >100 °C, mit ca. 180 °C gut erfüllt.

Die neuen Gläser besitzen auch hinsichtlich der Entmischungsneigung gute Eigenschaften. Ein praktisches Maß der Beurteilung des Entmischungsverhaltens stellt die Veränderung der hydrolytischen Beständigkeit durch Temperung dar.

Ein erfindungsgemäßes Glas wurde nach dem Guß und der Kühlung erneut auf 670 °C aufgeheizt und zwei Stunden bei dieser Temperatur ($T_g$+100 °C) gehalten. Die Messung der hydrolytischen Beständigkeit nach DIN 1211 ergab folgende Ergebnisse:

das Glas vor dem Tempern: HBK=1 mit 6,2 µg $Na_2O$/g Glasgrieß

das Glas nach dem Tempern: HBK=1 mit 9,3 µg $Na_2O$/g Glasgrieß

Da die erste hydrolytische Klasse bis zu einem Abtrag von 31 µg $Na_2O$/g Glasgrieß festgelegt ist, realisiert das neue Glas auch nach der Temperung noch eine sichere HBK 1. Zum Vergleich sei angeführt, daß ein Glas vom Typ des Borosilicatglases 3.3 durch zweistündige Temperung bei 630 °C ($T_g$ + 100 °C) eine Verringerung der hydrolytischen Beständigkeit von ca. 12 auf ca. 34 µg $Na_2O$/g Glasgrieß erfährt.

Die Beobachtung, daß man im erfindungsgemäßen Glaszusammensetzungsbereich sehr entmischungsstabile neue Gläser erschmelzen kann, wurde durch elektronenmikroskopische Aufnahmen bestätigt. So zeigten einige der Gläser nach viertägiger Temperung im Vergleich zum herkömmlichen JENA$^{er}$ Geräteglastyp und zum Duran$^{®}$ gleiche oder sehr ähnliche Bilder.

Die erfindungsgemäßen Gläser wurden im Labor in mittelfrequenz- oder superkanthalstabbeheizten Öfen in Platin- oder Quarztiegeln an Luftatmossphäre im Temperaturbereich von 1550 °C bis 1630 °C erschmolzen. Die Schmelzzeit betrug ca. 4-5 Stunden, das Schmelzvolumen ca. 1 Liter und die Schmelzen wurden nach der Läuterung homogenisiert. Als Läutermittel wurden Fluoride und Chloride, vorzugsweise 1-2 Gew.-% NaCl verwendet. Wenn Fluoride eingesetzt worden sind, wurden sie vorzugsweise als $CaF_2$ und oder $BaF_2$ in das Gemenge eingeführt. Als Glasrohstoffe wurden vorwiegend $SiO_2$, z.T. eisenarm, $H_3BO_3$, $Al(OH)_3$, $ZrO_2$, Alkali- und Erdalkalikarbonate bzw. Nitrate, ZnO, SnO und $SnO_2$ verwendet.

Die im Text erwähnten Tabellen zeigen Zusammensetzungen von Borosilikatgläsern, und daraus resultierende physikalische und chemische Eigenschaften.

Tabelle 1      Bekannte Borosilikatgläser hoher thermischer und chemischer Beständigkeit mit $\alpha$ $_{20/300}$ < 5.0 x 10$^{-6}$/K$^{-1}$
             Die Temperaturwechselbeständigkeit TWB wurde dabei folgendermaßen errechnet:

TWB = $\sigma_B(1-\mu)/\alpha$ x E  (entspr. $\Delta T_{max}$, die ein Körper noch verträgt)
Dabei wurden folgende Annahmen gemacht:

$\sigma_B$ - Biegezugfestigkeit = 50 N/mm$^2$ (nicht vorgespannt)
$\mu$ - Poisson-Zahl = 0,2
E - Elastizitätsmodul = 70 x 10$^3$ N/mm$^2$

Tabelle 2    Bekannte Borosilikatgläser hoher thermischer und chemischer Beständigkeit mit einem Verhältnis SiO$_2$ zu B$_2$O$_3$ von kleiner 8 (Gew.-%)

Tabelle 3    Weitere Beispiele bekannter Borosilikatgläser

Tabelle 4    Beispiele aus der DE PS 2 756 555 bekannter Borosilikatgläser

Tabelle 1

| Bekannte Borosilikatgläser hoher thermischer und chemischer Beständigkeit mit $\alpha_{20/300} < 5,0 \times 10^{-6}K^{-1}$ (Glaszusammensetzungen in Gew.-%) | | | | | | |
|---|---|---|---|---|---|---|
| | DURAN$^R$ 8330 | JENA$^{er}$ G 20 | SUPRAX$^R$ 8486 | JENA$^{er}$ Ggl/490/5 | FIOLAX$^R$ 8412 | SUPRAX$^R$ 8488 |
| $SiO_2$ | 80,0 | 75,5 | 75,5 | 73,2 | 74,7 | 74 |
| $B_2O_3$ | 13,0 | 9,0 | 11,5 | 11,0 | 10,0 | 12 |
| $Al_2O_3$ | 2,5 | 5,0 | 4,0 | 5,3 | 5,0 | 4 |
| $Na_2O$ | 3,5 | 5,3 | 4,0 | 7,0 | 6,5 | 7 |
| $K_2O$ | 1,0 | 1,2 | 1,0 | 0,2 | | |
| MgO | | | 0,5 | | | |
| CaO | | 0,4 | 1,0 | 0,8 | 1,5 | |
| BaO | | 3,6 | 2,5 | 2,5 | 2,0 | 1 |
| F | | | | | 0,3 | 1 |
| $ZrO_2$ | | | | | | 1 |
| | 100,0 | 100,0 | 100,0 | 100,0 | 100,0 | 100,0 |
| $SiO_2+B_2O_3$ | 93,0 | 84,5 | 87,0 | 84,2 | 84,7 | 86 |
| $SiO_2:B_2O_3$ | 6,2 | 8,4 | 6,6 | 6,7 | 7,5 | 6,2 |
| $SiO_2+Al_2O_3+ZrO_2$ | 82,5 | 80,5 | 79,5 | 78,5 | 79,7 | 79 |
| $MgO+CaO+BaO$ | - | 4,0 | 3,5 | 3,3 | 3,5 | 1 |
| $\rho.$ g/cm$^3$ | 2,23 | | 2,34 | 2,35 | 2,39 | 2,30 |
| $\alpha_{20/300}$ 10$^{-6}$K$^{-1}$ | 3,25 | 4,9 | 4,1 | 4,9 | 4,9 | 4,3 |
| $T_g$ °C | 530 | 569 | 550 | 560 | 560 | 545 |
| $V_A$ °C | 1270 | | 1230 | 1160 | 1160 | 1205 |
| HBK DIN 12 111 | 1 | 1 | 1 | 1 | 1 | 1 |
| SBK DIN 12 116 | 1 | 1 | 1 | 1 | 1 | 1 |
| LBK DIN 52 322 | 2 | 2 | 2 | 2 | 2 | 2 |
| TWB K | 192 | 116 | 147 | 116 | 111 | 138 |
| E 10$^{-3}$ N/mm | 63 | 70 | 66 | 70 | 73 | 67 |

Tabelle 2

Beispiele bekannter Borosilikatgläser hoher thermischer und chemischer Beständigkeit mit einem Verhältnis $SiO_2$ zu $B_2O_3$ von kleiner 8 (Glaszusammensetzungen in Gew.-%)

| | 1 | 2 | 3 | 4 | 5 | | |
|---|---|---|---|---|---|---|---|
| $SiO_2$ | 73,2 | 74,7 | 74,2 | 74,7 | 75,6 | | |
| $B_2O_3$ | 11,0 | 11,0 | 10,9 | 11,0 | 11,1 | | |
| $Al_2O_3$ | 5,3 | 4,7 | 4,7 | 4,4 | 4,4 | | |
| $Li_2O$ | - | 0,3 | 0,3 | 0,6 | 0,5 | | |
| $Na_2O$ | 7,0 | 6,6 | 6,5 | 6,3 | 6,4 | | |
| $K_2O$ | 0,2 | - | - | - | - | | |
| CaO | 0,8 | 0,5 | 0,5 | 0,3 | 0,3 | | |
| BaO | 2,5 | 1,0 | 1,0 | 1,0 | 0,2 | | |
| $ZrO_2$ | - | 1,0 | 1,7 | 1,7 | 1,5 | | |
| Rest | - | 0,2 | 0,2 | - | - | | |
| | 100,0 | 100,0 | 100,0 | 100,0 | 100,0 | | |
| $SiO_2+B_2O_3$ | 84,2 | 85,7 | 85,1 | 85,7 | 86,7 | | |
| $SiO_2:B_2O_3$ | 6,7 | 6,8 | 6,8 | 6,8 | 6,8 | | |
| $SiO_2+Al_2O_3+ZrO_2$ | 78,5 | 80,4 | 80,6 | 80,8 | 81,5 | | |
| $Li_2O+Na_2O+K_2O$ | 7,2 | 6,9 | 6,8 | 6,9 | 6,9 | | |
| CaO+BaO | 3,3 | 1,5 | 1,5 | 1,3 | 0,5 | | |
| LBK DIN 52 322 | 2 | 2 | 2 | 1 | 1 | 1 | 2 |
| Abtrag ($mg/dm^2$) | 100 | 80 | 83 | 75 | 70 | 74 | 79 |

Tabelle 3

Beispiele bekannter Borosilikatgläser (Gew.-%)
P 42 30 607.8

| | DE-AS 2818804 | 21 | 27 | 28 | 29 | 30 | 31 | 41 | GB-PS 791374 Beisp. 2 | SU-PS 675010 | SU-PS 424825 | DE-PS 767476 Beisp. E | JP-PS 4-33741 Beisp. 2 |
|---|---|---|---|---|---|---|---|---|---|---|---|---|---|
| $SiO_2$ | 72,6 | 76,4 | 77,60 | 75,5 | 75,45 | 75,90 | 75,05 | 74,2 | 74,7 | 77,5 | 76,2 | 80,1 | 76,5 |
| $B_2O_3$ | 12,38 | 12,0 | 9,00 | 10,0 | 10,00 | 10,00 | 10,00 | 11,1 | 11,5 | 3,5 | 12,3 | 11,4 | 12,7 |
| $Al_2O_3$ | 1,08 | 1,5 | 1,50 | 5,0 | 2,50 | 2,00 | 2,50 | 2,9 | 1,5 | 4,0 | 2,8 | 2,1 | 3,8 |
| $Na_2O$ | 6,6 | 3,6 | 2,50 | 6,0 | 2,00 | 2,20 | 2,00 | 1,7 | 5,0 | 5,5 | 2,2 | 5,7 | 6,6 |
| $K_2O$ | 0,47 | 1,0 | 2,95 | | 3,60 | 3,45 | 4,00 | 3.8 | | 4,0 | 1,0 | 0,6 | 0,2 |
| MgO | 2,58 | 0,8 | | | | 2,35 | | | | | $Li_2O$ 1,0 | $Li_2O$ 0,1 | |
| CaO | 4,0 | 3,0 | 2,35 | 1,5 | 2,35 | | 2,35 | 2,7 | $CaF_2$ 1,0 | | 0,5 | | |
| BaO | | 0,6 | | 2,0 | | 1,60 | | | | 4,5 | 3,5 | | |
| ZnO | | | 1,60 | | 1,60 | | 1,60 | 1,6 | | 1,0 | 0,5 | | |
| $ZrO_2$ | | 1,1 | 2,50 | | 2,50 | 2,50 | 2,50 | 2,0 | 4,7 | | | | |
| Rest | 0,29 | | | | | | | | | | | | 0,2 |
| | ------ | ------ | ------ | ------ | ------ | ------ | ------ | ------ | ------ | ------ | ------ | ------ | ------ |
| | 100,00 | 100,0 | 100,00 | 100,0 | 100,00 | 100,00 | 100,00 | 100,0 | 98,4 | 100,0 | 100,0 | 100,0 | 100,0 |
| $SiO_2+B_2O_3$ | 84,98 | 88,4 | 86,6 | 85,5 | 85,45 | 85,90 | 85,05 | 85,3 | 86,2 | 81,0 | 88,5 | 91,5 | 89,2 |
| $SiO_2:B_2O_3$ | 5,90 | 6,4 | 8,6 | 7,6 | 7,5 | 7,6 | 7,5 | 6,7 | 6,5 | 22,1 | 6,2 | 7,0 | 6,0 |
| $SiO_2+Al_2O_3+ZrO_2$ | 73,68 | 79,0 | 81,6 | 80,5 | 80,45 | 80,4 | 80,05 | 79,1 | 80,9 | 81,5 | 79,0 | 82,2 | 80,3 |
| $MgO+CaO+BaO+ZnO$ | 6,58 | 4,4 | 3,95 | 3,5 | 3,95 | 3,95 | 3,95 | 4,3 | 1,0 | 5,5 | 4,5 | 0 | 0 |
| $\alpha_{20/300}$ $(10^{-6} K^{-1})$ | 5,45x | 3,98 | 3,95 | 4,65 | 3,98 | 4,07 | 4,19 | 4,25 | 3,94 | - | - | 4,3 | 4,5 |

x : $\alpha_{20/300}$ $(10^{-6} K^{-1})$

EP 0 699 636 B1

Tabelle 4

Beispiele bekannter Borosilikatgläser (Gew.-%)

DE-AS 27 56 555

| | 2 | 3 | 4 | 6 | 7 | 8 | 10 | 11 | 12 | 13 | 14 | 15 | 17 | 18 | 19 |
|---|---|---|---|---|---|---|---|---|---|---|---|---|---|---|---|
| SiO₂ | 78,5 | 78,50 | 78,5 | 78,50 | 78,5 | 78,5 | 78,50 | 77,5 | 78,5 | 78,50 | 77,0 | 78,5 | 78,50 | 77,00 | 79,50 |
| B₂O₃ | 8,5 | 5,40 | 8,0 | 6,10 | 5,1 | 6,5 | 5,10 | 5,1 | 5,1 | 4,10 | 5,1 | 2,5 | 1,00 | 4,10 | 5,10 |
| Al₂O₃ | 4,0 | 3,50 | 3,5 | 3,50 | 3,5 | 3,5 | 3,50 | 3,5 | 3,5 | 3,50 | 5,0 | 3,5 | 3,50 | 3,50 | 3,5? |
| Na₂O | 4,0 | 5,00 | 5,5 | 5,00 | 5,3 | 5,5 | 5,30 | 5,3 | 5,3 | 5,30 | 5,3 | 5,3 | 5,30 | 5,80 | 5,30 |
| CaO | 1,8 | · | 1,5 | 2,40 | 3,0 | 2,4 | · | 3,0 | 3,0 | 2,40 | 3,0 | 2,4 | 2,40 | · | 3,00 |
| MgO | 1,2 | · | 1,0 | 1,70 | 2,1 | 1,6 | · | 2,1 | 2,1 | 1,70 | 2,1 | 1,7 | 1,70 | · | 2,10 |
| BaO | 2,0 | 2,50 | 2,0 | 2,80 | · | 2,0 | 7,60 | 2,0 | 2,5 | 4,50 | 2,5 | 6,1 | 7,60 | 9,60 | 5,50 |
| ZnO | · | 5,10 | | | 2,5 | | | ZrO₂ 1,5 | | | | | | | |
| As₂O₃ | 0,5 | 0,15 | 0,5 | 0,25 | · | · | 0,25 | · | 0,3 | 0,25 | · | 0,3 | 0,25 | 0,25 | 0,25 |
| NaCl | 0,5 | 0,70 | · | 0,75 | 0,5 | 0,5 | 0,60 | 0,5 | 0,5 | 0,60 | 0,5 | 0,5 | 0,60 | 0,60 | 0,69 |
| | 101,0 | 100,85 | 100,5 | 101,00 | 100,5 | 100,5 | 100,85 | 100,5 | 100,8 | 100,85 | 100,5 | 100,8 | 100,85 | 100,85 | 100,85 |
| SiO₂+B₂O₃ | 87,0 | 83,9 | 86,5 | 84,6 | 83,6 | 85,0 | 83,6 | 82,6 | 83,6 | 82,6 | 82,1 | 81,0 | 79,5 | 81,1 | 80,6 |
| SiO₂:B₂O₃ | 9,2 | 14,5 | 9,8 | 12,9 | 15,4 | 12,1 | 15,4 | 15,2 | 15,4 | 19,1 | 15,1 | 31,4 | 78,5 | 18,8 | 14,8 |
| SiO₂+Al₂O₃+ZrO₂ | 82,5 | 82,0 | 82,0 | 82,0 | 82,0 | 82,0 | 82,0 | 82,5 | 82,0 | 82,0 | 82,0 | 82,0 | 82,0 | 80,5 | 79,0 |
| MO | 5,0 | 7,6 | 4,5 | 6,9 | 7,6 | 6,0 | 7,6 | 7,1 | 7,6 | 8,6 | 7,6 | 10,2 | 11,7 | 9,6 | 10,6 |
| α20/300 (10⁻⁶K⁻¹) | 3,85 | 4,19 | 4,36 | 4,49 | 4,54 | 4,58 | 4,66 | 4,67 | 4,71 | 4,75 | 4,82 | 4,88 | 5,00 | 5,03 | 5,09 |

**Patentansprüche**

1.   Borsäurearmes Borosilikatglas hoher chemischer Beständigkeit

**gekennzeichnet durch**

eine Zusammensetzung in Gew.-% auf Oxidbasis von

| | |
|---|---|
| $SiO_2$ | > 75 |
| $B_2O_3$ | 1 -< 9 |
| $Al_2O_3$ | 3 - 6 |
| $Li_2O$ | 0 - 4 |
| $Na_2O$ | 0 - 8 |
| $K_2O$ | 0 - 6 |
| MgO | 0 - 3 |
| CaO | 0 - 3 |
| BaO | 0 - 2 |
| SrO | 0 - 2 |
| ZnO | 0 - 3 |
| $ZrO_2$ | 0 - 3 |
| $SnO_2$ | 0 - 3 |
| SnO | 0 - 3 |
| $TiO_2$ | 0 - 2 |
| $CeO_2$ | 0 - 2 |
| $Fe_2O_3$ | 0 - 1 |

mit

| | |
|---|---|
| $SiO_2+B_2O_3$ | > 83 |
| $SiO_2:B_2O_3$ | > 8 |
| $SiO_2+Al_2O_3+ZrO_2$ | > 83 |
| $Li_2O+Na_2O+K_2O$ | 5-10 |
| $MgO+CaO+BaO+SrO+ZnO$ | $\leq 3$ |

2. Borosilikatglas nach Anspruch 1,
   **gekennzeichnet durch**

   - eine Laugenbeständigkeit nach DIN 52322 der Klasse 1,
   - eine Wärmedehnung $\alpha_{20/300}$ zwischen $4.0\text{-}5.3 \times 10^{-6} K^{-1}$,
   - ein Verhältnis $\alpha'/\alpha$ der Wärmedehnungskoeffizienten oberhalb $T_g(\alpha')$ zu unterhalb $T_g(\alpha)$ von 4 bis 8,
   - eine Glastransformationstemperatur zwischen 500°C und 600°C,
   - hohe Strahlungsdurchlässigkeit und
   - eine UV-Transmission $\tau_{250\,nm/1\,mm}$ von 0-70 % bzw. $\tau_{300nm/1\,mm}$ von 0-91 %.

3. Borosilikatglas nach Anspruch 1
   **gekennzeichnet durch**
   eine Zusammensetzung in Gew.-% auf Oxidbasis von

| | |
|---|---|
| SiO$_2$ | > 75 |
| B$_2$O$_3$ | 1 -< 9 |
| Al$_2$O$_3$ | 3 - 6 |
| Li$_2$O | 0,05 - 4 |
| Na$_2$O | 0 - 8 |
| K$_2$O | 0 - 6 |
| MgO | 0 - 3 |
| CaO | 0 - 3 |
| BaO | 0 - 2 |
| SrO | 0 - 2 |
| ZnO | 0 - 3 |
| ZrO$_2$ | 0,5 - 3 |
| SnO$_2$ | 0 - 3 |
| SnO | 0 - 3 |
| TiO$_2$ | 0 - 2 |
| Fe$_2$O$_3$ | 0 - 1 |
| CeO$_2$ | 0 - 2 |

mit

| | |
|---|---|
| SiO$_2$+B$_2$O$_3$ | > 83 |
| SiO$_2$:B$_2$O$_3$ | > 8 |
| SiO$_2$+Al$_2$O$_3$+ZrO$_2$ | > 83 |
| Li$_2$O+Na$_2$O+K$_2$O | 5-10 |
| MgO+CaO+BaO+SrO+ZnO | $\leq$ 3 |

4. Borosilikatglas nach den Ansprüchen 1 oder 3,
   **gekennzeichnet durch**
   eine Zusammensetzung in Gew.-% auf Oxidbasis von

**14**

| | |
|---|---|
| SiO$_2$ | 77,0 - 81,5 |
| B$_2$O$_3$ | 3,0 - 8,9 |
| Al$_2$O$_3$ | 3,5 - 5,5 |
| Li$_2$O | 0,3 - 3,0 |
| Na$_2$O | 2,0 - 7,5 |
| K$_2$O | 0 - 5,0 |
| MgO | 0 - 2,0 |
| CaO | 0 - 2,0 |
| BaO | 0 - 1,0 |
| ZnO | 0 - 2,0 |
| ZrO$_2$ | 0,5 - 2,0 |
| SnO$_2$ | 0 - 2,0 |
| SnO | 0 - 2,0 |
| Fe$_2$O$_3$ | 0 - 1,0 |
| TiO$_2$ | 0 - 2,0 |

mit

| | |
|---|---|
| SiO$_2$+B$_2$O$_3$ | > 83 |
| SiO$_2$:B$_2$O$_3$ | > 8 |
| SiO$_2$+Al$_2$O$_3$+ZrO$_2$ | > 83 |
| Li$_2$O+Na$_2$O+K$_2$O | 7-10 |
| MgO+CaO+BaO+SrO+ZnO | $\leq$ 3 |

5. Borosilikatglas nach den Ansprüchen 3 und 4,
   **gekennzeichnet durch**
   eine UV-Transmission $\tau_{250\ nm/1\ mm}$ von 0-60 % bzw. $\tau_{300\ nm/1\ mm}$ von 0-90 %.

6. Borosilikatglas nach den Ansprüchen 1 bis 5,
   **gekennzeichnet durch**
   einen Anteil von As$_2$O$_3$ und/oder Sb$_2$O$_3$ und/oder PbO bis zu 1 Gew.-% alleine oder in deren Summe.

7. Borosililkatglas nach Anspruch 1,
   **gekennzeichnet durch**
   eine Zusammensetzung in Gew.-% auf Oxidbasis von

| SiO$_2$ | 79,0 - 81,0 |
|---|---|
| B$_2$O$_3$ | 6,0 - 8,0 |
| Al$_2$O$_3$ | 3,5 - 5,0 |
| Li$_2$O | 0,3 - 0,8 |
| Na$_2$O | 6,0 - 8,0 |
| K$_2$O | 0 - 3,0 |
| CaO | 0 - 1,0 |
| BaO | 0 - 1,0 |
| SnO$_2$ | 0 - 1,0 |
| SnO | 0 - 1,0 |
| Fe$_2$O$_3$ | 0 - 1,0 |
| TiO$_2$ | 0 - 2,0 |

mit

| SiO$_2$+B$_2$O$_3$ | > 85 |
|---|---|
| SiO$_2$:B$_2$O$_3$ | > 9 |
| SiO$_2$+Al$_2$O$_3$ | > 84 |
| Li$_2$O+Na$_2$O+K$_2$O | 7 - 8 |
| CaO+BaO | ≤ 1 |

8. Borosilikatglas nach dem Anspruch 1,
   **gekennzeichnet durch**
   eine Zusammensetzung in Gew.-% auf Oxidbasis von

| SiO$_2$ | 77,0 - 79,0 |
|---|---|
| B$_2$O$_3$ | 7,0 - 8,9 |
| Al$_2$O$_3$ | 3,5 - 5,5 |
| Li$_2$O | 0,05 - 0,8 |
| Na$_2$O | 6,0 - 8,0 |
| K$_2$O | 0 - 3,0 |
| CaO | 0 - 1,0 |
| BaO | 0 - 1,0 |
| ZrO$_2$ | 1,0 - 2,0 |
| SnO$_2$ | 0 - 1,0 |
| SnO | 0 - 1,0 |
| Fe$_2$O$_3$ | 0 - 1,0 |
| TiO$_2$ | 0 - 2,0 |

mit

| | |
|---|---|
| $SiO_2+B_2O_3$ | > 85 |
| $SiO_2:B_2O_3$ | > 9 |
| $SiO_2+Al_2O_3+ZrO_2$ | > 83,5 |
| $Li_2O+Na_2O+K_2O$ | 7-8 |
| $CaO+BaO$ | ≤ 1 |

9. Borosilikatglas nach einem der vorhergehenden Ansprüche 1 bis 8,
**gekennzeichnet durch**
den Zusatz von Fluß- und/oder Läutermitteln, insbesondere von Fluoriden und/oder Chloriden zu den Gemenge-Zusammensetzungen in Anteilen bis zu 4 Gew.-% $F^-$ und/oder $Cl^-$.

10. Verwendung des borsäurearmen Borosilikatglases nach wenigstens einem der vorhergehenden Ansprüche als

- Neutralglas
- Geräteglas für Laboranwendungen
- Glas für den Chemieanlagenbau und technische Anlagen
- Lampenglas
- Hauswirtschaftsglas
- Glas für den Molybdäneinschmelzungen
- Glas für Wolframeinschmelzungen
- Zwischenglas für Verschmelzungen
- Glas für die Vakuumtechnik mit hoher thermischer Belastung
- Röntgenröhrenglas
- gammastrahlenresistentes Glas
- Brandschutzsicherheitsglas
- Sonnenkollektorglas
- Sonnenreaktorglas
- Glas für Zwecke der Pharmazie und Biologie
- Zusatz zu Fritten und Glasuren.

**Claims**

1. Low boric acid borosilicate glass having high chemical resistance, characterised by the composition, as wt-% based on oxide:

| | |
|---|---|
| $SiO_2$ | > 75 |
| $B_2O_3$ | 1 - < 9 |
| $Al_2O_3$ | 3 - 6 |
| $Li_2O$ | 0 - 4 |
| $Na_2O$ | 0 - 8 |
| $K_2O$ | 0 - 6 |
| $MgO$ | 0 - 3 |
| $CaO$ | 0 - 3 |
| $BaO$ | 0 - 2 |
| $SrO$ | 0 - 2 |
| $ZnO$ | 0 - 3 |
| $ZrO_2$ | 0 - 3 |
| $SnO_2$ | 0 - 3 |
| $SnO$ | 0 - 3 |
| $TiO_2$ | 0 - 2 |
| $CeO_2$ | 0 - 2 |
| $Fe_2O_3$ | 0 - 1 |

having

| | |
|---|---|
| $SiO_2+B_2O_3$ | > 83 |
| $SiO_2:B_2O_3$ | > 8 |
| $SiO_2+Al_2O_3+ZrO_2$ | > 83 |
| $Li_2O+Na_2O+K_2O$ | 5-10 |
| $MgO+CaO+BaO+SrO+Zno$ | $\leq 3$ |

2. Borosilicate glass according to Claim 1,
   characterised by

   - Class 1 alkali resistance to DIN 52322,
   - a thermal expansion $\alpha_{20/300}$ of between 4.0 and 5.3 x $10^{-6}$/K,
   - an expansion coefficient ratio $\alpha'/\alpha$ of above $T_g(\alpha')$ to below $T_g(\alpha)$ of 4 to 8,
   - a glass transformation temperature of between 500°C and 600°C,
   - high radiation transmission and
   - an ultraviolet transmittance $\tau_{250\ nm/1\ mm}$ of 0-70% or $\tau_{300\ nm/1\ mm}$ of 0-91%.

3. Borosilicate glass according to Claim 1,
   characterised by the composition, as wt-% based on oxide:

| | |
|---|---|
| $SiO_2$ | > 75 |
| $B_2O_3$ | 1 - < 9 |
| $Al_2O_3$ | 3 - 6 |
| $Li_2O$ | 0.05 - 4 |
| $Na_2O$ | 0 - 8 |
| $K_2O$ | 0 - 6 |
| $MgO$ | 0 - 3 |
| $CaO$ | 0 - 3 |
| $BaO$ | 0 - 2 |
| $SrO$ | 0 - 2 |
| $ZnO$ | 0 - 3 |
| $ZrO_2$ | 0.5 - 3 |
| $SnO_2$ | 0 - 3 |
| $SnO$ | 0 - 3 |
| $TiO_2$ | 0 - 2 |
| $Fe_2O_3$ | 0 - 1 |
| $CeO_2$ | 0 - 2 |

having

| | |
|---|---|
| $SiO_2+B_2O_3$ | > 83 |
| $SiO_2:B_2O_3$ | > 8 |
| $SiO_2+Al_2O_3+ZrO_2$ | > 83 |
| $Li_2O+Na_2O+K_2O$ | 5-10 |
| $MgO+CaO+BaO+SrO+Zno$ | ≤ 3 |

4. Borosilicate glass according to Claims 1 or 3,
   characterised by the composition, as wt-% based on oxide:

| | |
|---|---|
| $SiO_2$ | 77.0 - 81.5 |
| $B_2O_3$ | 3.0 - 8.9 |
| $Al_2O_3$ | 3.5 - 5.5 |
| $Li_2O$ | 0.3 - 3.0 |
| $Na_2O$ | 2.0 - 7.5 |
| $K_2O$ | 0 - 5.0 |
| MgO | 0 - 2.0 |
| CaO | 0 - 2.0 |
| BaO | 0 - 1.0 |
| ZnO | 0 - 2.0 |
| $ZrO_2$ | 0.5 - 2.0 |
| $SnO_2$ | 0 - 2.0 |
| SnO | 0 - 2.0 |
| $Fe_2O_3$ | 0 - 1.0 |
| $TiO_2$ | 0 - 2.0 |

having

| | |
|---|---|
| $SiO_2+B_2O_3$ | > 83 |
| $SiO_2:B_2O_3$ | > 8 |
| $SiO_2+Al_2O_3+ZrO_2$ | > 83 |
| $Li_2O+Na_2O+K_2O$ | 7-10 |
| $MgO+CaO+BaO+SrO+ZnO$ | $\leq 3$ |

5. Borosilicate glass according to Claims 3 and 4,
   characterised by an ultraviolet transmittance $\tau_{250\ nm/1\ mm}$ of 0-60% or $\tau_{350\ nm/1\ mm}$ of 0-90%.

6. Borosilicate glass according to Claims 1 to 5,
   characterised in that it contains up to 1 wt-% of $As_2O_3$ and/or $Sb_2O_3$ and/or PbO, either alone or as a total thereof.

7. Borosilicate glass according to Claim 1,
   characterised by the composition, as wt-% based on oxide:

| SiO$_2$ | 79.0 - 81.0 |
|---|---|
| B$_2$O$_3$ | 6.0 - 8.0 |
| Al$_2$O$_3$ | 3.5 - 5.0 |
| Li$_2$O | 0.3 - 0.8 |
| Na$_2$O | 6.0 - 8.0 |
| K$_2$O | 0 - 3.0 |
| CaO | 0 - 1.0 |
| BaO | 0 - 1.0 |
| SnO$_2$ | 0 - 1.0 |
| SnO | 0 - 1.0 |
| Fe$_2$O$_3$ | 0 - 1.0 |
| TiO$_2$ | 0 - 2.0 |

having

| SiO$_2$+B$_2$O$_3$ | > 85 |
|---|---|
| SiO$_2$:B$_2$O$_3$ | > 9 |
| SiO$_2$+Al$_2$O$_3$ | > 84 |
| Li$_2$O+Na$_2$O+K$_2$O | 7-8 |
| CaO+BaO | ≤ 1 |

8. Borosilicate glass according to Claim 1,
   characterised by the composition, as wt-% based on oxide:

| SiO$_2$ | 77.0 - 79.0 |
|---|---|
| B$_2$O$_3$ | 7.0 - 8.9 |
| Al$_2$O$_3$ | 3.5 - 5.5 |
| Li$_2$O | 0.05 - 0.8 |
| Na$_2$O | 6.0 - 8.0 |
| K$_2$O | 0 - 3.0 |
| CaO | 0 - 1.0 |
| BaO | 0 - 1.0 |
| ZrO$_2$ | 1.0 - 2.0 |
| SnO$_2$ | 0 - 1.0 |
| SnO | 0 - 1.0 |
| Fe$_2$O$_3$ | 0 - 1.0 |
| TiO$_2$ | 0 - 2.0 |

EP 0 699 636 B1

having

| SiO$_2$+B$_2$O$_3$ | > 85 |
|---|---|
| SiO$_2$:B$_2$O$_3$ | > 9 |
| SiO$_2$+Al$_2$O$_3$+ZrO$_2$ | > 83.5 |
| Li$_2$O+Na$_2$O+K$_2$O | 7-8 |
| CaO+BaO | ≤ 1 |

9. Borsilicate glass according to one of the preceding Claims 1 to 8, characterised by the addition to the batch compositions of fluxing agents and/or refining agents, in particular of fluorides and/or chlorides, in quantities of up to 4 wt-% F$^-$ and/or Cl$^-$.

10. Use of the low boric acid borosilicate glass according to at least one of the preceding claims as

- neutral glass
- laboratory glassware
- glass for chemical plant construction and industrial plant
- lamp glass
- household glass
- fusion seals with molybdenum
- fusion seals with tungsten
- intermediate sealing glass
- glass placed under high thermal load in vacuum technology
- X-ray tube glass
- gamma ray-resistant glass
- fire barrier safety glass
- solar collector glass
- solar reactor vessel glass
- glass for pharmaceutical and biological applications
- an additive to frits and glazes.

**Revendications**

1. Verre borosilicaté pauvre en acide borique ayant une haute résistance chimique, caractérisé par la composition suivante (en % en poids sur la base d'oxydes) :

22

| | |
|---|---|
| $SiO_2$ | > 75 |
| $B_2O_3$ | 1 - <9 |
| $Al_2O_3$ | 3 - 6 |
| $Li_2O$ | 0 - 4 |
| $Na_2O$ | 0 - 8 |
| $K_2O$ | 0 - 6 |
| $MgO$ | 0 - 3 |
| $CaO$ | 0 - 3 |
| $BaO$ | 0 - 2 |
| $SrO$ | 0 - 2 |
| $ZnO$ | 0 - 3 |
| $ZrO_2$ | 0 - 3 |
| $SnO_2$ | 0 - 3 |
| $SnO$ | 0 - 3 |
| $TiO_2$ | 0 - 2 |
| $CeO_2$ | 0 - 2 |
| $Fe_2O_3$ | 0 - 1 |

avec

| | |
|---|---|
| $SiO_2 + B_2O_3$ | > 83 |
| $SiO_2 : B_2O_3$ | > 8 |
| $SiO_2 + Al_2O_3 + ZrO_2$ | > 83 |
| $Li_2O + Na_2O + K_2O$ | 5 - 10 |
| $MgO + CaO + BaO + SrO + ZnO$ | $\leq 3$ |

2.  Verre borosilicaté conforme à la revendication 1, caractérisé par

    -   une résistance aux bases (selon DIN 52322) de classe 1,
    -   un coefficient de dilatation thermique $\alpha_{20/300}$ compris entre 4,0 $10^{-6}K^{-1}$ et 5,3 $10^{-6}K^{-1}$,
    -   un rapport $\alpha'/\alpha$ des coefficients de dilatation au-dessus de Tg ($\alpha'$) et au-

    dessous de Tg ($\alpha$) compris entre 4 et 8,

    -   une température de transformation comprise entre 500 et 600 °C,
    -   une perméabilité élevée aux rayonnements et
    -   un facteur de transmission UV $\tau_{250nm/1mm}$ compris entre 0 et 70 % ou $\tau_{300nm/1mm}$ compris entre 0 et 91 %.

3.  Verre borosilicaté conforme à la revendication 1, caractérisé par la composition suivante (en % en poids sur la base d'oxydes) :

| | |
|---|---|
| $SiO_2$ | > 75 |
| $B_2O_3$ | 1 - <9 |
| $Al_2O_3$ | 3 - 6 |
| $Li_2O$ | 0,05 - 4 |
| $Na_2O$ | 0 - 8 |
| $K_2O$ | 0 - 6 |
| $MgO$ | 0 - 3 |
| $CaO$ | 0 - 3 |
| $BaO$ | 0 - 2 |
| $SrO$ | 0 - 2 |
| $ZnO$ | 0 - 3 |
| $ZrO_2$ | 0,5 - 3 |
| $SnO_2$ | 0 - 3 |
| $SnO$ | 0 - 3 |
| $TiO_2$ | 0 - 2 |
| $Fe_2O_3$ | 0 - 1 |
| $CeO_2$ | 0 - 2 |

avec

| | |
|---|---|
| $SiO_2 + B_2O_3$ | > 83 |
| $SiO_2 : B_2O_3$ | > 8 |
| $SiO_2 + Al_2O_3 + ZrO_2$ | > 83 |
| $Li_2O + Na_2O + K_2O$ | 5 - 10 |
| $MgO + CaO + BaO + SrO + ZnO$ | ≤ 3 |

4. Verre borosilicaté conforme aux revendications 1 ou 3, caractérisé par la composition suivante (en % en poids sur la base d'oxydes) :

| SiO$_2$ | 77,0 - 81,5 |
|---|---|
| B$_2$O$_3$ | 3,0 - 8,9 |
| Al$_2$O$_3$ | 3,5 - 5,5 |
| Li$_2$O | 0,3 - 3,0 |
| Na$_2$O | 2,0 - 7,5 |
| K$_2$O | 0 - 5,0 |
| MgO | 0 - 2,0 |
| CaO | 0 - 2,0 |
| BaO | 0 - 1,0 |
| ZnO | 0 - 2,0 |
| ZrO$_2$ | 0,5 - 2,0 |
| SnO$_2$ | 0 - 2,0 |
| SnO | 0 - 2,0 |
| Fe$_2$O$_3$ | 0 - 1,0 |
| TiO$_2$ | 0 - 2,0 |

avec

| SiO$_2$ + B$_2$O$_3$ | > 83 |
|---|---|
| SiO$_2$ : B$_2$O$_3$ | > 8 |
| SiO$_2$ + Al$_2$O$_3$ + ZrO$_2$ | > 83 |
| Li$_2$O + Na$_2$O + K$_2$O | 7 - 10 |
| MgO + CaO + BaO + SrO + ZnO | $\leq$ 3 |

5. Verre borosilicaté conforme aux revendications 3 et 4, caractérisé par un facteur de transmission UV $\tau_{250nm/1mm}$ compris entre 0 et 60 % ou $\tau_{300nm/1mm}$ compris entre 0 et 90 %.

6. Verre borosilicaté conforme aux revendications 1 à 5, caractérisé par une teneur en As$_2$O$_3$ et/ou Sb$_2$O$_3$ et/ou PbO pouvant atteindre 1 % en poids, qu'il s'agisse d'un seul de ces composés ou de la somme de ces composés.

7. Verre borosilicaté conforme à la revendication 1, caractérisé par la composition suivante (en % en poids sur la base d'oxydes) :

| | |
|---|---|
| SiO$_2$ | 79,0 - 81,0 |
| B$_2$O$_3$ | 6,0 - 8,0 |
| Al$_2$O$_3$ | 3,5 - 5,0 |
| Li$_2$O | 0,3 - 0,8 |
| Na$_2$O | 6,0 - 8,0 |
| K$_2$O | 0 - 3,0 |
| CaO | 0 - 1,0 |
| BaO | 0 - 1,0 |
| SnO$_2$ | 0 - 1,0 |
| SnO | 0 - 1,0 |
| Fe$_2$O$_3$ | 0 - 1,0 |
| TiO$_2$ | 0 - 2,0 |

avec

| | |
|---|---|
| SiO$_2$ + B$_2$O$_3$ | > 85 |
| SiO$_2$ : B$_2$O$_3$ | > 9 |
| SiO$_2$ + Al$_2$O$_3$ | > 84 |
| Li$_2$O + Na$_2$O + K$_2$O | 7 - 8 |
| CaO + BaO | ≤ 1 |

8. Verre borosilicaté conforme à la revendication 1, caractérisé par la composition suivante (en % en poids sur la base d'oxydes) :

| | |
|---|---|
| SiO$_2$ | 77,0 - 79,0 |
| B$_2$O$_3$ | 7,0 - 8,9 |
| Al$_2$O$_3$ | 3,5 - 5,5 |
| Li$_2$O | 0,05 - 0,8 |
| Na$_2$O | 6,0 - 8,0 |
| K$_2$O | 0 - 3,0 |
| CaO | 0 - 1,0 |
| BaO | 0 - 1,0 |
| ZrO$_2$ | 1,0 - 2,0 |
| SnO$_2$ | 0 - 1,0 |
| SnO | 0 - 1,0 |
| Fe$_2$O$_3$ | 0 - 1,0 |
| TiO$_2$ | 0 - 2,0 |

avec

| | |
|---|---|
| $SiO_2 + B_2O_3$ | > 85 |
| $SiO_2 : B_2O_3$ | > 9 |
| $SiO_2 + Al_2O_3 + ZrO_2$ | > 83,5 |
| $Li_2O + Na_2O + K_2O$ | 7 - 8 |
| $CaO + BaO$ | ≤ 1 |

9. Verre borosilicaté conforme à une des revendications précédentes 1 à 8, caractérisé en ce que l'on ajoute aux compositions de mélange des fondants ou des agents d'affinage, en particulier des fluorures et/ou des chlorures à raison de 4 % en poids de $F^-$ et/ou de $Cl^-$.

10. Utilisation du verre borosilicaté pauvre en acide borique conforme à au moins une des revendications précédentes comme

- verre neutre
- verre pour ustensiles de laboratoire
- verre pour installations chimiques et techniques
- verre pour ampoules
- verre pour applications ménagères
- verre pour soudure verre-molybdène
- verre pour soudure verre-tungstène
- "brasure" (verre de soudure) pour soudure verre-verre
- verre pour appareils à vide à sollicitations thermiques importantes
- verre pour tubes à rayons X
- verre résistant aux rayonnements gamma
- verre pare-feu
- verre pour collecteurs solaires
- verre pour réacteurs solaires
- verre pour applications pharmaceutiques et biologiques
- additifs pour frittes et glaçures.

Abbildung 1

Transmissionseigenschaften von erfindungsgemäßen Gläsern

Beispiel 1 (ohne $ZrO_2$)

Beispiel 7 (mit $ZrO_2$-Zusatz)

EP 0 699 636 B1